# EUROPÄISCHE PATENTSCHRIFT

(11) **EP 1 922 171 B1**
(45) Veröffentlichungstag und Bekanntmachung des Hinweises auf die Patenterteilung: **05.08.2009**
(21) Anmeldenummer: 06791912.6
(22) Anmeldetag: 07.09.2006
(51) Int. Cl.: B23B 31/02

(54) **WERKZEUGHALTER ZUR SCHRUMPFBEFESTIGUNG VON WERKZEUGEN**
TOOL HOLDER FOR CLAMPING TOOLS BY SHRINK FIT
PORTE-OUTILS POUR FIXER DES OUTILS PAR SERRAGE

(30) Priorität: 09.09.2005 DE 202005014350 U
(43) Veröffentlichungstag der Anmeldung: 21.05.2008
(73) Patentinhaber: Haimer GmbH, 86568 Hollenbach-Igenhausen (DE)
(72) Erfinder: HAIMER, Franz, 86568 Igenhausen (DE); KÜGLE, Wolfgang, 86551 Aichach-Griesbeckerzell (DE)
(74) Vertreter: Bockhorni, Josef
(86) Internationale Anmeldenummer: PCT/EP2006/008740
(87) Internationale Veröffentlichungsnummer: WO 2007/028616

(56) Entgegenhaltungen:
- EP-A1- 1 529 584
- DE-A1-9102004 019 86
- DE-C2- 19 944 440

## Beschreibung

Die vorliegende Erfindung bezieht sich auf einen Werkzeughalter zur Schrumpfbefestigung von Werkzeugen mit bevorzugt zylindrischen Schäften gemäß dem Oberbegriff von Anspruch 1. Ein solcher Werkzeughalter ist beispielweise aus EP 1 529 584 A1 bekannt.

Solche Werkzeughalter sind seit längerem bekannt. Sie dienen zur Einspannung von Dreh-, Bohr-, Reib-, Schleif- und Fräswerkzeugen und umfassen ein Schrumpffutter, das einen Spannabschnitt mit einer axialen Innenbohrung aufweist, in der der Schaft des Werkzeugs mittels Einschrumpfens befestigbar ist.

Beim Einschrumpfvorgang wird der Spannabschnitt, dessen Innenbohrung einen geringfügig kleineren Innendurchmesser aufweist als der Außendurchmesser des Werkzeugschafts, durch Erwärmung, vorzugsweise mittels einer Induktionsspule, aufgeweitet und nach dem Einfügen des Werkzeugschafts wieder abgekühlt, wodurch zwischen Werkzeugschaft und Schrumpffutter eine drehmomentfeste Verbindung ausgebildet wird.

Bisher bekannten Ausführungsformen solcher Werkzeughalter, wie sie beispielsweise die DE 199 44 440 C2 und DE 101 14 149 C2 zeigen, weisen schon eine sehr gute Schwingungsdämpfung und Drehstabiltät auf. Jedoch besteht bei ihnen immer noch die Gefahr, dass sie insbesondere bei Anwendungen mit extrem schnell rotierenden Werkzeugen schwingungsanfällig werden, wodurch das Werkzeug während seiner Rotation eine mehr oder weniger präzesierende Bewegung um die Längsachse des Werkzeughalters ausführen kann und deshalb die Genauigkeit und Reproduzierbarkeit damit hergestellter Werkstücke vermindert sein kann. Um eine hohe Genauigkeit und Reproduzierbarkeit dennoch zu gewährleisten, dürfen daher solche Werkzeuge nicht extrem schnell drehend verwendet werden und auch Vorschub und Schnitttiefe dürfen nicht zu hoch gewählt werden. Auf diese Weise ist jedoch die Zerspanungsleistung nicht optimal, wodurch die Maschinenlaufzeit pro hergestelltem Werkstück nicht optimiert ist.

Aber nicht nur bei schnell drehenden Werkzeugen sind solche Werkzeughalter nachteilig. Auch bei nichtdrehenden Werkzeugen können über die Einwirkung des zu bearbeitenden Werkstücks Auslenkungen des Werkzeugs aus der Werkzeughalterachse und Schwingungen hervorgerufen werden, die ebenfalls die Bearbeitungspräzision einschränken.

Weitere Werkzeughalter mit Schrumpffutter sind in DE 202 00 298 U1 und DE 10 2004 019 869 A1 in Form eines teleskopierbaren Werkzeughalters bzw. eines extra verspannten Werkzeughalters beschrieben. Während mit dem teleskopierbaren Werkzeughalter Werkzeuge zum einen weit entfernt von der eigentlichen Kupplung und zum anderen durch tiefe und schlanke Öffnungen hindurch gehalten werden können, ist mit dem extra verspannten Werkzeughalter ein weitgehender Schwingungsausgleich möglich. Der erste Werkzeughalter bietet keine gesonderte Schwingsdämpfung und die Schwingungsdämpfung des zweiten Werkzughalters ist relativ kompliziert und technisch aufwendig gestaltet.

Ein Werkzeughalter gemäß dem Oberbegriff des Anspruchs 1 zeichnet sich durch einen Konturverlauf des Schrumpffutters aus, bei dem der Schrumpffutterdurchmesser zwischen einem ersten, vorderen Durchmesser am Schrumpffutterkopf und einem zweiten, hinteren Durchmesser am Schrumpffutterfuß sich dahingehend sprungförmig erweitert, dass sich mindestens zwei Konturabschnitte des Schrumpffutters ausbilden. Der Übergang zwischen dem ersten und dem zweiten Abschnitt, in dem der Durchmesser sprungförmig ansteigt, definiert auch den Übergang zwischen Schrumpffutterkopf und Fuß.

Durch diese besondere Formgebung ist der Schrumpffutterkopf nicht nur schlanker als der Fuß sondern er weist auch wesentlich weniger Masse auf, die beispielsweise bei einem sehr schnellen Drehen des Werkzeughalters Schwingungen verursachen und verstärken könnte. Ein solcher Werkzeughalter kann also mit wesentlich höheren Drehzahlen betrieben werden als herkömmliche Werkzeughalter, wobei aufgrund der verringerten Schwingungsanfälligkeit Werkstücke mit sehr guter Genauigkeit und Reproduzierbarkeit hergestellt werden können. Dadurch dass der Schrumpffutterfuß dickwandiger ausgeführt ist als der Kopf werden gleichzeitig nicht nur Normvorgaben hinsichtlich der Gestaltung des Werkzeughalters erfüllt, die aus dem geometrischen Aufbau der Schnittstelle zwischen Maschine und Werkzeughalter resultieren, sondern auch eine ausreichend hohe Steifigkeit des Schrumpffutters gewährleistet.

Es ist daher Aufgabe der vorliegenden Erfindung, einen Werkzeughalter zur Schrumpfbefestigung zu Verfügung zu stellen, der eine geringere Schwingungsanfälligkeit aufweist und dadurch eine höhere Zerspanungsleistung ermöglicht.

Diese Aufgabe wird gelöst mit einem Werkzeughalter gemäß Anspruch 1, wobei bevorzugte Weiterbildungen Gegenstand der abhängigen Unteransprüche sind.

Erfindungsgemäß weist die Aufnahme des Werkzeugschaftes einen axialen Anschlag auf, der zur Festlegung der axialen Position des Werkzeugschaftes innerhalb der Aufnahme dient, d. h. der die Eindringtiefe des Werkzeugschafts in das Schrumpffutter festlegt. In Bezug auf den Übergang ist der axiale Anschlag so angeordnet, dass der Werkzeugschaft vollständig in dem Schrumpffutterkopf aufgenommen ist und nicht teilweise in den Schrumpffutterfuß hineinragt. Mit anderen Worten soll sich der axiale Anschlag auf Höhe des Übergangs bzw. zwischen diesem und dem vorderen Ende des Schrumpffutterkopfes befinden und nicht im Bereich zwischen Übergang und unterem Ende des Schrumpffutterfußes angeordnet sein. Durch diese besondere axiale Anordnung des axialen Anschlags in Bezug auf den Übergang wird zum einen ein besonders vorteilhaftes Verhältnis zwischen dem in seiner Masse verringertem Schrumpffutterkopf und in seiner Steifigkeit höheren Schrumpffutterfuß hergestellt. Und zum anderen lässt sich der Schrumpffutterkopf beispielsweise mittels einer Induktionsspule problemlos erwärmen, wobei die Induktionsspule keine komplizierte Geometrie aufweisen muss. Des Weiteren wird auf diese Weise eine möglichst gleichmäßige Erwärmung und Aufweitung des Schrumpffutterkopfes ermöglicht, da in allen Bereichen des Spannabschnitts ähnliche Wandstärken vorliegen und so eine ungleichmäßige Erwärmung und Ausdehnung des Spannabschnitts vermieden wird.

Bevorzugt weist der erste Abschnitt eine konische Kontur auf, die einheitlich zwischen dem vorderen Ende des Schrumpffutterkopfes und dem Übergang verläuft und dessen Durchmesser sich in Richtung des Übergangs in einem auf die Längsachse des Werkzeughalter bezogenen Winkelbereich von 1 ° bis 20°, insbesondere 4,5°, erweitert. Mit dieser geometrischen Gestaltung des Schrumpffutterkopfes ist der Werkzeughalter mit allen gängigen Schrumpfvorrichtungen kompatibel.

Die Erweiterung des Durchmessers der Kontur des Schrumpffutters verläuft erfindungsgemäß am Übergang in einem Bereich von 10° in Bezug senkrecht zu der Werkzeughalterlängsachse, bis zu 50°. Bevorzugt wird der Übergang mit 30° erweitert.

Vorteilhaft schließt sich zum unteren Ende des Schrumpffutterfußes, das an das Mittelteil des Werkzeughalters angrenzt, nach dem zweiten Abschnitt ein dritter Abschnitt an, der eine im Wesentlichen zylindrische Kontur aufweist, wobei der zweite Abschnitt eine im Wesentlichen konische Kontur aufweist, die sich zum dritten Abschnitt hin mit einem Winkel in Bezug auf die Längsachse im Bereich von 1° bis 20°, insbesondere von 6° bei einem Werkzeughalter mit Hohlschaftkupplung und von 8° bei einem Werkzeughalter mit Steilkegelschaftkupplung, erweitert. Dabei erfolgt der Konturübergang zwischen zweiten und dritten Abschnitt im Wesentlichen stetig, wobei aber auch nichtstetige Übergänge möglich sind. Auf diese Weise weist der Fuß angrenzend an das Mittelteil des Werkzeughalters eine normmäßig vorgegeben Kontur auf, während der Bereich zwischen dem dritten Abschnitt und dem Übergang aufgrund der konischen Kontur zusätzlich in seiner Wandstärke verringert ist, wodurch das Schrumpffutter in seiner Masse weiter reduziert ist. Dadurch ist auch die Schwingungsanfälligkeit des Werkzeughalters zusätzlich reduziert.

Insbesondere bei Werkzeughaltern mit langen Schrumpffuttern ist es vorteilhaft, wenn der Bereich das Schrumpffutters einen vierteilig ausgebildeten Konturverlauf aufweist, nämlich einen ersten Abschnitt, einen an den Übergang anschließenden zweiten im Wesentlichen zylinderförmigen Abschnitt, daran anschließend einen sich konisch erweiternden dritten Abschnitt und wiederum daran anschließend einen vierten im Wesentlichen zylindrischen Abschnitt, der an das Mittelteil anschließt und die normmäßigen Vorgaben erfüllt. Dabei soll sich die konische Kontur des dritten Abschnitts in Richtung Mittelteil mit einem Winkel in Bezug auf die Längsachse des Werkzeughalters im Bereich von 1° bis 20°, insbesondere von 6° bei einem Werkzeughalter mit Hohlschaftkupplung und von 8° bei einem Werkzeughalter mit Steilkegelschaftkupplung, erweitern, wobei die Konturübergänge zwischen dem zweiten und dritten bzw. dem dritten und vierten Abschnitt im Wesentlichen stetig verlaufen, wobei aber auch nichtstetige Übergänge möglich sind. Durch diese vierteilige Konturgebung wird die Masse des Schrumpffutterfußes gegenüber einer dreiteiligen Konturgebung zusätzlich reduziert.

In einer bevorzugten Ausführungsform weist der zweite Abschnitt Bohrungen auf, in die Auswuchtelemente, insbesondere Wuchtschrauben einfügbar sind, die zur Ermöglichung eines Rundlaufs über die Verhinderung von Unwuchten des Werkzeughalters dienen.

Für die Kühlung des Werkzeugs während der Werkstückbearbeitung ist vorteilhaft eine axiale Innenbohrung im Inneren des Werkzeughalters vorgesehen, die eine Kühlflüssigkeit dem Werkzeug bzw. der Stelle des Eingriffs des Werkzeugs in das Werkstück zuführt. Vorteilhaft weist dieser Zuführkanal einen im Vergleich zum Außendurchmesser des Schrumpffutters relativ geringen Durchmesser, insbesondere im Bereich von 3 mm bis 6 mm auf. Durch diesen nur relativ kleinen Durchmesser ist die Bohrung ebenfalls günstig für das Schwingungsverhalten und die Stabilität des Werkzeughalters, wodurch immer noch eine ausreichend hohe Steifigkeit des Werkzeughalters gewährleistet wird.

Weitere Kennzeichen, Merkmale und Vorteile der vorliegenden Erfindung werden anhand der Beschreibung eines bevorzugten Ausführungsbeispiels im Zusammenhang mit den Figuren deutlich werden, wobei
- Fig. 1: eine Längsschnittansicht einer bevorzugten Ausführungsform eines Werkzeughalters zeigt und
- Fig. 2: Hinweise zum Verständnis der Bemaßung des Werkzeughalters aus Fig. 1 gibt.

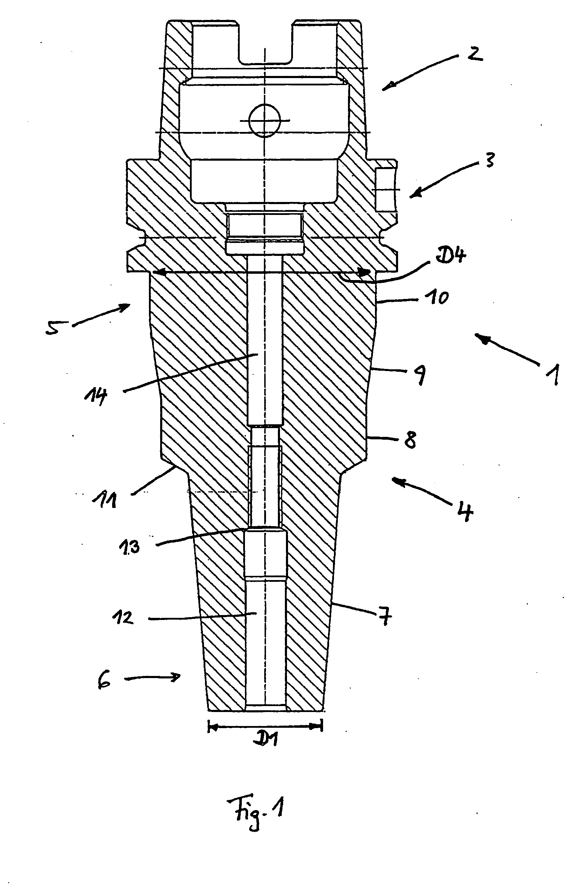

In Fig. 1 ist ein Werkzeugfutteral 1 im Längsschnitt dargestellt, dass einstückig ausgebildet ist und eine Hohlschaftkupplung 2, ein Mittelteil 3 und ein Schrumpffutter 4 umfasst. Das Schrumpffutter 4 weist einen Schrumpffutterfuß 5 auf, der mit seinem unteren Bereich an das Mittelteil 3 angrenzt, und einen Schrumpffutterkopf 6. Sehr deutlich ist der vierteilige Konturverlauf des Schrumpffutters 4 zu erkennen, der einen ersten konischen Abschnitt 7, einen zweiten zylindrischen Abschnitt 8, einen dritten konischen Abschnitt 9 und einen vierten zylindrischen Abschnitt 10 aufweist. Diese Abschnitte 7, 8, 9, 10 verbinden den im Wesentlichen rotationssymmetrischen Konturverlauf des Schrumpffutters 4 ausgehend von einem vorderen Durchmesser D1 des Schrumpffutterkopfes 6 zum hinteren Durchmesser D4 des Schrumpffutterfußes 5.

Der Konturverlauf des Werkzeughalterdurchmessers verläuft in den einzelnen Abschnitten 7, 8, 9, 10 im Wesentlichen gleichmäßig und zwischen den Abschnitten 8, 9, 10 stetig, wobei der Durchmesser des Schrumpffutters 4 sich ausgehend vom vorderen Durchmesser D1 bis zum hinteren Durchmesser D4 fortlaufend vergrößert und nur in dem zweiten und vierten Abschnitt 8, 10 im Wesentlichen konstant bleibt. Zwischen dem ersten und zweiten Abschnitt 7, 8 vergrößert sich der Durchmesser in dem Übergangsbereich 11 sprunghaft, d. h. der Konturdurchmesser verläuft beim Übergang vom ersten zum zweiten Abschnitt 7, 8 nicht stetig.

In Folge des Übergangs 11 weist der Schrumpffutterfuß 5 eine wesentlich größere Wandstärke auf als der Schrumpffutterkopf 6, wodurch der Schrumpffutterkopf 6 nicht nur schlanker erscheint sondern auch eine geringere Masse aufweist verglichen mit einem Schrumpffutterkopf 6, dessen Konturverlauf ausgehend vom Schrumpffutterfuß 5 stetig verlaufen würde.

Durch diese Maßnahmen ist die Schwingungsanfälligkeit des Werkzeughalters 1 wesentlicher abgesetzt, da sich weniger Masse weit entfernt vom Befestigungspunkt des Werkzeughalters 1 in der Werkzeugmaschine befindet und mehr Masse nahe diesem Befestigungspunkt angeordnet ist. Zugleich weist der in Fig. 1 gezeigte Werkzeughalter 1 eine ausreichend hohe Steifigkeit auf und erfüllt insbesondere normbedingte Vorgaben, die beispielsweise den maximalen Durchmesser des vierten Abschnitts 10 festlegen.

Der Schrumpffutterkopf 6 weist in seinem vorderen Bereich einen Spannabschnitt auf, der durch eine axiale Innenbohrung 12 zur Aufnahme des Werkzeugschafts gekennzeichnet ist. Die axiale Eindringtiefe des Werkzeugschafts in die axiale Innenbohrung 12 wird durch einen axialen Anschlag 13 bestimmt, der in Form einer radialen Verengung der Innenbohrung 12 ausgebildet ist. Durch den axialen Anschlag 13 befindet sich der Werkzeugschaft im eingespannten Zustand nur im Schrumpffutterkopf 6 und nicht im Schrumpffutterfuß 7, wodurch der Einschrumpfungsvorgang wesentlich vereinfacht und erleichtert wird.

Anschließend an den axialen Anschlag 13 befindet sich ein Zuführkanal 14, der ebenfalls als axiale Innenbohrung Kühlmittel dem in der Aufnahme 12 eingeschrumpften Werkzeugschaft zuführt. Der Zuführkanal 14 weist dabei einen im Vergleich zum Außendurchmesser des Schrumpffutters 4 relativ geringen Durchmesser im Bereich von 3 mm bis 6 mm auf. Durch diese nur relativ kleine Bohrung wird ebenfalls in günstiges Schwingungsverhalten und eine hohe Stabilität des Werkzeughalters befördert.

Als Beispiel, um das Verständnis der Erfindung zu erleichtern, kann das Kühlmittel entweder durch einen axial im Inneren des Werkzeugs geführten Kühlmittelkanal dem Werkzeugkopf und dem Werkstück zugeleitet werden und/oder es können im Schrumpffutterkopf 6 Bohrungen (nicht gezeigt) vorgesehen sein, die ausgehend von dem Zuführkanal 14 das Kühlmittel innerhalb der Wand des Schrumpffutterkopfes 6 an dem Werkzeugschaft vorbei zum vorderen Ende des Schrumpffutterkopfes 6 führen. Beispielsweise kann dies mit Hilfe von zwei in Bezug zur Längsachse des Werkzeughalters 1 spiegelsymmetrisch angeordneten Bohrungen erfolgen, die im ersten Abschnitt 7 neben dem Werkzeugschaft in der Wandung verlaufen.

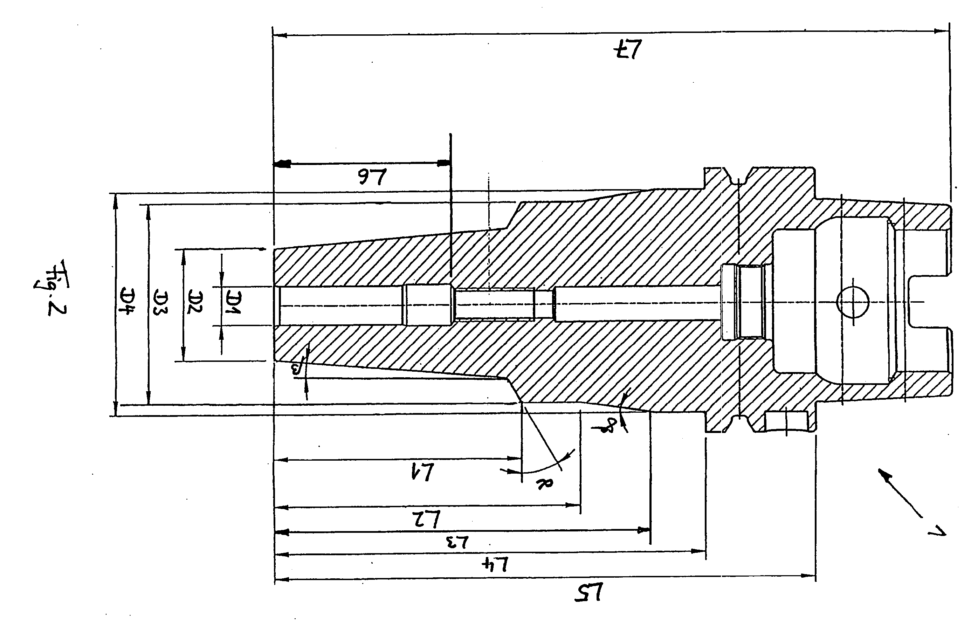

In Fig. 2 ist der Werkzeughalter 1 aus Fig. 1 noch einmal im Längsschnitt abgebildet, wobei jedoch einzelne Bemaßungen genauer definiert sind. In den nachfolgen Tabellen sind für die einzelnen Maße beispielhaft Werte angegeben. Diese Werte sind alle in mm bzw. in ° für die Maße α, β und γ angegeben und sind in Abhängigkeit von der Art des Werkzeughalterkupplungsschaftes 2 und der Schrumpffuttergesamtlänge L4 aufgelistet.

Alle Maßangaben beziehen sich auf einen unteren Durchmesser D4 des Schrumpffutterfußes 5 von 50 mm bzw. 53 mm, der normgemäß durch die Wahl der Maschinenschnittstelle vorgegeben ist. Demzufolge sind die Tabellen 1, 2, 3 und 4 auch nur bis zu einem Werkzeugschaftdurchmesser D1 von bis zu 16 mm ausgeführt, da sich bei größeren Werkzeugschaftdurchmessern D1 ein solch sprungförmiger Übergang 11 mit Standardwerkstoffen im Wesentlichen nicht mehr verwirklichen ließe. Um auch für größere Werkzeugschaftdurchmesser D1 drehstabile Werkzeughalter gemäß der vorliegend Erfindung, also mit dem beschriebenen Konturverlauf, für Anwendungen in hohen Drehzahlbereichen bereitzustellen, müssten größere Schnittstellen verwendet werden, die größere Durchmesser D4 des vierten Abschnitts 10 erlauben würden.

Die Winkelangaben für die Maße α, β und γ hängen von der Wahl der Schrumpffuttergesamtlänge L4 und dem Durchmesser D4 Schrumpffutterfußes 5. Sie sind deshalb in den Tabellen 1, 2, 3 und 4 jeweils konstant.

**Tabelle 1:**

| **D1** | **D2** | **D3** | **D4** | **L1** | **L2** | **L3** | **L4** | **L5** | **L6** | **L7** | α | β | γ |
|---|---|---|---|---|---|---|---|---|---|---|---|---|---|
| 6 | 21 | 40 | 53 | 48,5 | 60,5 | 84 | 104 | 130 | 38 | 162 | 30 | 4,5 | 6 |
| 8 | 21 | 40 | 53 | 48,5 | 60,5 | 84 | 104 | 130 | 38 | 162 | 30 | 4,5 | 6 |
| 10 | 24 | 40 | 53 | 55 | 65,5 | 84 | 104 | 130 | 43 | 162 | 30 | 4,5 | 6 |
| 12 | 24 | 40 | 53 | 55 | 65,5 | 84 | 104 | 130 | 48 | 162 | 30 | 4,5 | 6 |
| 14 | 27 | 42 | 53 | 60,5 | 70,5 | 84 | 104 | 130 | 48 | 162 | 30 | 4,5 | 6 |
| 16 | 27 | 42 | 53 | 60,5 | 70,5 | 84 | 104 | 130 | 51 | 162 | 30 | 4,5 | 6 |

In Tabelle 1 sind Maßangaben für einen Werkzeughalter 1 mit einer Hohlschaftkupplung 2 für eine erste Schrumpffutterlänge L4 aufgelistet.

**Tabelle 2:**

| **D1** | **D2** | **D3** | **D4** | **L1** | **L2** | **L3** | **L4** | **L5** | **L6** | **L7** | α | β | γ |
|---|---|---|---|---|---|---|---|---|---|---|---|---|---|
| 6 | 21 | 40 | 53 | 48,5 | 60,5 | 114 | 134 | 160 | 38 | 192 | 30 | 4,5 | 6 |
| 8 | 21 | 40 | 53 | 48,5 | 60,5 | 114 | 134 | 160 | 38 | 192 | 30 | 4,5 | 6 |
| 10 | 24 | 40 | 53 | 55 | 65,5 | 114 | 134 | 160 | 43 | 192 | 30 | 4,5 | 6 |
| 12 | 24 | 40 | 53 | 55 | 65,5 | 114 | 134 | 160 | 48 | 192 | 30 | 4,5 | 6 |
| 14 | 27 | 42 | 53 | 60,5 | 70,5 | 114 | 134 | 160 | 48 | 192 | 30 | 4,5 | 6 |
| 16 | 27 | 42 | 53 | 60,5 | 70,5 | 114 | 134 | 160 | 51 | 192 | 30 | 4,5 | 6 |

In Tabelle 2 sind Maßangaben für einen Werkzeughalter 1 mit einer Hohlschaftkupplung 2 für eine zweite Schrumpffutterlänge L4 aufgelistet.

**Tabelle 3:**

| **D1** | **D2** | **D3** | **D4** | **L1** | **L2** | **L3** | **L4** | **L5** | **L6** | **L7** | a | β | γ |
|---|---|---|---|---|---|---|---|---|---|---|---|---|---|
| 6 | 21 | 40 | 50 | 48,5 | 60,5 | 91 | 110,9 | 130 | 38 | 198,4 | 30 | 4,5 | 8 |
| 8 | 21 | 40 | 50 | 48,5 | 60,5 | 91 | 110,9 | 130 | 38 | 198,4 | 30 | 4,5 | 8 |
| 10 | 24 | 40 | 50 | 55 | 65,5 | 91 | 110,9 | 130 | 43 | 198,4 | 30 | 4,5 | 8 |
| 12 | 24 | 40 | 50 | 55 | 65,5 | 91 | 110,9 | 130 | 48 | 198,4 | 30 | 4,5 | 8 |
| 14 | 27 | 42 | 50 | 60,5 | 70,5 | 91 | 110,9 | 130 | 48 | 198,4 | 30 | 4,5 | 8 |
| 16 | 27 | 42 | 50 | 60,5 | 70,5 | 91 | 110,9 | 130 | 51 | 198,4 | 30 | 4,5 | 8 |

In Tabelle 3 sind Maßangaben für einen Werkzeughalter 1 mit einer Steilkegelschaftkupplung (nicht gezeigt) für eine erste Schrumpffutterlänge L4 aufgelistet, wobei sich die Formgebung des Werkzeughalters 1 mit Steilkegelschaftkupplung nur im Bereich des Kupplungsschaftes und des Mittelteils von der Gestalt eines Werkzeughalters 1 mit Hohlschaftkupplung 2 unterscheidet.

**Tabelle 4:**

| **D1** | **D2** | **D3** | **D4** | **L1** | **L2** | **L3** | **L4** | **L5** | **L6 L7** | α | β | γ |
|---|---|---|---|---|---|---|---|---|---|---|---|---|
| 6 | 21 | 40 | 50 | 48,5 | 60,5 | 121 | 140,9 | 160 | 38 228,4 | 30 | 4,5 | 8 |
| 8 | 21 | 40 | 50 | 48,5 | 60,5 | 121 | 140,9 | 160 | 38 228,4 | 30 | 4,5 | 8 |
| 10 | 24 | 40 | 50 | 55 | 65,5 | 121 | 140,9 | 160 | 43 228,4 | 30 | 4,5 | 8 |
| 12 | 24 | 40 | 50 | 55 | 65,5 | 121 | 140,9 | 160 | 48 228,4 | 30 | 4,5 | 8 |
| 14 | 27 | 42 | 50 | 60,5 | 70,5 | 121 | 140,9 | 160 | 48 228,4 | 30 | 4,5 | 8 |
| 16 | 27 | 42 | 50 | 60,5 | 70,5 | 121 | 140,9 | 160 | 51 228,4 | 30 | 4,5 | 8 |

In Tabelle 4 sind Maßangaben für einen Werkzeughalter 1 mit einer Steilkegelschaftkupplung (nicht gezeigt) für eine zweite Schrumpffutterlänge L4 aufgelistet.

Aus dem vorstehenden ist deutlich geworden, dass ein Werkzeughalter 1 gemäß der vorliegenden Erfindung wesentlich weniger schwingungsanfällig ist als bekannte Werkzeughalter, wodurch u. a. höhere Drehzahlen möglich sind, so dass die Zerspanungsleistung, die durch die Drehzahl des Werkzeugs, den Vorschub des Werkzeugs und die Schnitttiefe des Werkzeugs bestimmt wird, erhöht werden kann und so gleichzeitig die zur Herstellung eines Werkstücks erforderlichen Maschinenlaufzeiten reduziert werden können. Demzufolge ist mit einem Werkzeughalter der vorliegenden Erfindung eine wesentlich effizientere und ökonomischer Herstellung und Bearbeitung von Werkstücken möglich.

## Patentansprüche

1. Werkzeughalter (1) zur Schrumpfbefestigung von Werkzeugen mit bevorzugt zylindrischen Werkzeugschäften,
mit einem Schaft zur Kupplung mit einer Werkzeugmaschine, insbesondere einer Hohlschaftkupplung (2) oder einer Steilkegelschaftkupplung,
einem Schrumpffutter (4) mit einem Schrumpffutterkopf (6) und einem Schrumpffutterfuß (5), das im Schrumpffutterkopf (6) einen Spannabschnitt
mit einer Aufnahme (12) in Form einer axialen Innenbohrung zum Einspannen des Werkzeugschafts aufweist, und
einem zwischen dem Kupplungsschaft (2) und dem Schrumpffutterfuß (5) angeordneten Mittelteil (3),
wobei das Schrumpffutter (4) am zum Werkzeug hinweisenden Kopf (6) einen vorderen Durchmesser (D1) und am zum Mittelteil (3) hinweisenden Fuß (5) einen hinteren Durchmesser (D4) aufweist, wobei
die den vorderen und hinteren Durchmesser (D1,D4) des Schrumpffutters (4) verbindende Kontur in Bezug auf den Durchmesserverlauf der Kontur mindestens zwei im Wesentlichen gleichförmige verlaufende Abschnitte (7,8) aufweist, wobei der erste Abschnitt (7) am Schrumpffutterkopf (6) und der zweite Abschnitt (8) am Schrumpffutterfuß (5) angeordnet ist und zwischen Schrumpffutterkopf (6) und -fuß (5) ein Übergang (11) angeordnet ist, wobei sich der Durchmesser des Schrumpffutters (4) am Übergang (11) vom ersten zum zweiten Abschnitt (7,8) im Wesentlichen sprungartig vergrößert, so dass das Schrumpffutter (4) einen Kopf (6) aufweist, der schlanker ist als der Schrumpffutterfuß (5) und sich der Durchmesser der Kontur des Schrumpffutters (4) sich am Übergang (11) vom ersten Abschnitt (7) zum zweiten Abschnitt (8) in Richtung des Schrumpffutterfußes (5) mit einem Winkel senkrecht zur Werkzeughalterlängsachse im Bereich von 10° bis 50° erweitert,
**dadurch gekennzeichnet, dass**
der Werkzeughalter einstückig ausgeführt ist und die Aufnahme (12) einen axialen Anschlag (13) zur Festlegung der axialen Position des Werkzeugschaftes innerhalb der Aufnahme (12) aufweist und der axiale Anschlag (13) sich axial gesehen auf Höhe bzw. zwischen der Position des Übergangs (11) und dem vorderen Ende des Schrumpffutterkopfes (6) befindet, so dass sich im eingespannten Zustand das eingespannte Ende des Werkzeugschaftes axial gesehen auf Höhe des Übergangs (11) bzw. zwischen Übergang (11) und vorderem Ende des Schrumpffutterkopfes (6) befindet.

2. Werkzeughalter (1) gemäß Anspruch 1,
**dadurch gekennzeichnet, dass**
der erste Abschnitt (7) zwischen dem vorderen Ende des Schrumpffutterkopfes (6) und dem Übergang (11) verläuft und eine im Wesentlichen konische Kontur aufweist, wobei sich der Durchmesser der Kontur in Richtung zum Übergang (11) hin bevorzugt mit einem Winkel in Bezug auf die Längsachse des Werkzeughalters (1) im Bereich von 1° bis 20°, insbesondere 4,5°, erweitert.

3. Werkzeughalter (1) gemäß Anspruch 1 oder 2,
**dadurch gekennzeichnet, dass**
der Durchmesser der Kontur des Schrumpffutters (4) sich am Übergang (11) vom ersten Abschnitt (7) zum zweiten Abschnitt (8) in Richtung des Schrumpffutterfußes (5) mit einem Winkel senkrecht zur Werkzeughalterlängsachse im Bereich von 30° erweitert.

4. Werkzeughalter (1) gemäß einem der Ansprüche 1 bis 3,
**dadurch gekennzeichnet, dass**
zwischen dem Mittelteil und dem zweiten Abschnitt ein dritter Abschnitt angeordnet ist, wobei der dritte Abschnitt eine im Wesentlichen zylindrische Kontur aufweist und der Durchmesser der Kontur des zweiten Abschnitts sich konisch in Richtung des Mittelteils mit einem Winkel in Bezug auf die Werkzeughalterlängsachse im Bereich von 1 bis 20°, insbesondere von 6° bei einem Werkzeughalter mit Hohlschaftkupplung und von 8° bei einem Werkzeughalter mit Steilkegelschaftkupplung, erweitert, wobei der Konturübergang zwischen zweiten und dritten Abschnitt im Wesentlichen stetig erfolgt.

5. Werkzeughalter (1) gemäß einem der Ansprüche 1 bis 3,
**dadurch gekennzeichnet, dass**
zwischen dem Mittelteil (3) und dem zweiten Abschnitt (8) ein dritter Abschnitt (9) und zwischen dem dritten Abschnitt (9) und dem Mittelteil (3) ein vierter Abschnitt (10) angeordnet ist, wobei der zweite (8) und der vierte Abschnitt (10) im Wesentlichen zylindrische Konturen aufweisen und der dritte Abschnitt (9) eine im Wesentlichen konische Kontur aufweist, wobei der Durchmesser der Kontur des dritten Abschnitts (9) sich in Richtung des Mittelteils (3) mit einem Winkel in Bezug auf die Werkzeughalterlängsachse im Bereich von 1 bis 20°, insbesondere von 6° bei einem Werkzeughalter (1) mit Hohlschaftkupplung (2) und von 8° bei einem Werkzeughalter mit Steilkegelschaftkupplung erweitert, wobei die Konturübergänge zwischen dem zweiten und dritten (8,9) bzw. dem dritten und vierten Abschnitt (9,10) im Wesentlichen stetig erfolgen.

6. Werkzeughalter (1) gemäß einem der vorherigen Ansprüche,
**dadurch gekennzeichnet, dass**
in dem zweiten Abschnitt (8) Bohrungen für Auswuchtelemente, insbesondere Wuchtschrauben, vorgesehen sind.

7. Werkzeughalter (1) gemäß einem der vorherigen Ansprüche,
**dadurch gekennzeichnet, dass**
im Inneren des Werkzeughalters (1) als Zuführkanal (14) für Kühlflüssigkeit eine axiale Innenbohrung vorgesehen ist, wobei der Zuführkanal (14) einen im Vergleich zum Außendurchmesser des Schrumpffutters (4) relativ geringen Durchmesser, insbesondere im Bereich von 3 mm bis 6 mm, aufweist.

## Claims

1. A tool holder (1) for the contraction clamping of tools with preferably cylindrical tool shafts, including a shaft for coupling to a machine tool, particularly a hollow shaft coupling (2) or a deep taper shaft coupling, a contraction chuck (4) with a contraction chuck head (6) and a contraction chuck foot (5), which has a clamping section in the contraction chuck head (6) with a mounting (12) in the form of an axial internal bore for clamping the tool shaft and a middle portion (3) disposed between the coupling shaft (2)b and the contraction chuck foot (5), wherein the contraction chuck (4) has a front diameter (D1) at the head directed towards the tool and a rear diameter (D4) at the foot (5) directed towards the middle portion (3), whereby the contour connecting the front and rear diameters (D1, D4) of the contraction chuck (4) has at least two substantially uniformly extending sections (7, 8) with respect to the variation in diameter of the contour, whereby the first section (7) is arranged on the contraction chuck (6) and the second section (8) is arranged on the contraction chuck foot (5) and disposed between the contraction chuck head (6) and foot (5) there is a transition (11), whereby the diameter of the contraction chuck (4) increases substantially abruptly at the transition (11) from the first to the second section (7, 8) so that the contraction chuck (4) has a head (6), which is slimmer than the contraction chuck foot (5) and the diameter of the contour of the contraction chuck (4) expands at the transition (11) from the first section (7) to the second section (8) in the direction of the contraction chuck foot (5) with an angle perpendicular to the longitudinal axis of the tool holder in the range of 10° to 50°, **characterised in that** the tool holder is of one-piece construction and the mounting (12) has an axial abutment (13) for fixing the axial position of the tool shaft within the mounting (12) and the axial abutment (13) is located, seen in the axial direction, at the height of or between the position of the transition (11) and the front end of the contraction chuck head (6) so that, in the clamped state, the clamped end of the tool shaft is located, seen in the axial direction, at the height of the transition (11) or between the transition (11) and the front end of the contraction chuck head (6).

2. A tool holder (1) as claimed in Claim 1, **characterised in that** the first section (7) extends between the front end of the contraction chuck head (6) and the transition (11) and has a substantially conical contour, whereby the diameter of the contour increases in the direction towards the transition (11), preferably with an angle with respect to the longitudinal axis of the tool holder (1) in the range of 1° to 20°, particularly 4.5°.

3. A tool holder (1) as claimed in Claim 1 or 2, **characterised in that** the diameter of the contour of the contraction chuck (4) increases at the transition (11) from the first section (7) to the second section (8) in the direction of the contraction chuck foot (5) with an angle perpendicular to be longitudinal axis of the tool holder in the region of 30°.

4. A tool holder (1) as claimed in one of Claims 1 to 3, **characterised in that** arranged between the middle portion and the second section there is a third section, whereby the third section has a substantially cylindrical contour and the diameter of the contour of the second section increases conically in the direction of the middle portion with an angle with respect to the longitudinal axis of the tool holder in the range of 1 to 20°, particularly of 6° in the case of a tool holder with a hollow shaft coupling and of 8° in the case of a tool holder with a deep taper shaft coupling, whereby the contour transition occurs substantially uniformly between the second and third sections.

5. A tool holder (1) as claimed in one of Claims 1 to 3, **characterised in that** arranged between the middle portion (3) and the second section (8) there is a third section (9) and between the third section (9) and the middle portion (3) there is a fourth section (10), whereby the second (8) and the fourth sections (10) have substantially cylindrical contours and the third section (9) has a substantially conical contour, whereby the diameter of the contour of the third section (9) increases in the direction of the middle portion (3) with an angle with respect to the longitudinal axis of the tool holder in the range of 1 to 20°, particularly of 6° in the case of a tool holder (1) with a hollow shaft coupling (2) and 8° in case of a tool holder with a deep taper shaft coupling, whereby the contour transitions between the second and third (8, 9) and the third and fourth sections (9, 10) occur substantially uniformly.

6. A tool holder (1) as claimed in one of the preceding claims, **characterised in that** bores for balancing elements, particularly balancing screws, are provided in the second section (8).

7. A tool holder (1) as claimed in one of the preceding claims, **characterised in that** provided in the interior of the tool holder (1) there is an axial internal bore constituting a supply passage (14) for cooling liquid, whereby the supply passage (14) has a relatively small diameter in comparison to the external diameter of the contraction chuck (4) particularly in the range of 3mm to 6mm.

## Revendications

1. Porte-outil (1) pour la fixation par serrage d'outils présentant des tiges d'outils de préférence cylindriques,
avec une tige pour l'accouplement avec une machine-outil, en particulier un accouplement à tige creuse (2) ou un accouplement à tige conique à petit angle,
un mandrin de serrage (4) avec une tête de mandrin de serrage (6) et un pied de mandrin de serrage (5), qui présente, dans la tête de mandrin (6), un tronçon de serrage avec un logement (12) sous la forme d'un perçage intérieur axial pour enserrer la tige de l'outil, et
avec une partie médiane (3) agencée entre la tige d'accouplement (2) et le pied de mandrin de serrage (5),
dans lequel le mandrin de serrage (4) présente un diamètre antérieur (D1) au niveau de la tête (6) tournée vers l'outil et un diamètre postérieur (D4) au niveau du pied (5) tourné vers la partie médiane (3),
dans lequel le contour qui relie le diamètre antérieur et le diamètre postérieur (D1, D4) du mandrin de serrage (4) présente, par référence à l'évolution en diamètre du contour, au moins deux tronçons (7, 8) qui s'étendent essentiellement de manière régulière, le premier tronçon (7) étant agencé au niveau de la tête de mandrin de serrage (6) et le second tronçon (8) étant agencé au niveau du pied de mandrin de serrage (5) et une transition (11) est ménagée entre la tête de mandrin de serrage (6) et le pied de mandrin de serrage (5), et le diamètre du mandrin de serrage (4) au niveau de la transition (11) du premier tronçon vers le second tronçon (7, 8) s'agrandit essentiellement avec un saut, de sorte que le mandrin de serrage (4) présente une tête (6) qui est plus fine que le pied de mandrin de serrage (5), et que le diamètre du contour du mandrin de serrage (4) s'élargit, au niveau de la transition (11) du premier tronçon (7) au second tronçon (8) en direction du pied de mandrin de serrage (5) selon un angle, perpendiculairement à l'axe longitudinal du porte-outil, dans la plage de 10 à 50°,
**caractérisé en ce que**
leur porte-outil est réalisé d'une seule pièce et le logement (12) présente une butée axiale (13) pour définir la position axiale de la tige d'outil à l'intérieur du logement (12) et la butée axiale (13) se trouve, considérée axialement, à la hauteur de la position de la transition (11) ou respectivement entre la position de la transition (11) et l'extrémité antérieure de la tête de mandrin de serrage (6), de sorte que, dans l'état serré, l'extrémité enserrée de la tige d'outil se trouve, considérée axialement, à la hauteur de la transition (11) ou respectivement entre la transition (11) et l'extrémité antérieure de la tête de mandrin de serrage (6).

2. Porte-outil (1) selon la revendication 1,
**caractérisé en ce que** le premier tronçon (7) s'étend entre l'extrémité antérieure de la tête de mandrin de serrage (6) et la transition (11) et présente un contour sensiblement conique, le diamètre du contour s'élargissant en direction de la transition (11), de préférence avec un angle, par référence à l'axe longitudinal du porte-outil (1), dans la plage de 1° à 20°, en particulier 4,5°.

3. Porte-outil (1) selon la revendication 1 ou 2,
**caractérisé en ce que** le diamètre du contour du mandrin de serrage (4) s'élargit au niveau de la transition (11) du premier tronçon (7) au second tronçon (8) en direction du pied de mandrin de serrage (5) sous un angle dans la plage de 30° perpendiculairement à l'axe longitudinal du porte-outil.

4. Porte-outil (1) selon l'une des revendications 1 à 3,
**caractérisé en ce qu'**un troisième tronçon est agencé entre la partie médiane et le second tronçon, ledit troisième tronçon présentant un contour sensiblement cylindrique, et le diamètre du contour du second tronçon s'élargit de manière conique en direction de la partie médiane avec un angle, par référence à l'axe longitudinal du porte-outil, dans la plage de 1 à 20°, en particulier de 6° dans le cas d'un porte-outil avec accouplement à tige creuse, et de 8° dans le cas d'un porte-outil avec accouplement à tige conique à petit angle, dans lequel la transition du contour entre le second et le troisième tronçon s'effectue sensiblement de manière continue.

5. Porte-outil (1) selon l'une des revendications 1 à 3,
**caractérisé en ce qu'**un troisième tronçon (9) est agencé entre la partie médiane (3) et le second tronçon (8), et un quatrième tronçon (10) est agencé entre le troisième tronçon (9) et la partie médiane (3), dans lequel le second tronçon (8) et le quatrième tronçon (10) présentent des contours sensiblement cylindriques, et le troisième tronçon (9) présente un contour sensiblement conique, le diamètre du contour du troisième tronçon (9) s'élargissant en direction de la partie médiane (3) avec un angle, par référence à l'axe longitudinal du porte-outil, dans la plage de 1 à 20°, en particulier de 6° dans le cas d'un porte-outil (1) avec accouplement à tige creuse (2), et de 8° dans le cas d'un porte-outil avec accouplement à tige conique à petit angle, les transitions de contour entre le second tronçon et le troisième tronçon (8, 9) et respectivement entre le troisième tronçon et le quatrième tronçon (9, 10) s'effectuant sensiblement en continu.

6. Porte-outil (1) selon l'une des revendications précédentes,
**caractérisé en ce que** des perçages sont prévus dans le second tronçon (8) pour des éléments d'équilibrage, en particulier des vis d'équilibrage.

7. Porte-outil (1) selon l'une des revendications précédentes,
**caractérisé en ce qu'**il est prévu un perçage intérieur axial à l'intérieur du porte-outil (1) à titre de canal d'amenée (14) pour un liquide de refroidissement, ledit canal d'amenée (14) présentant un diamètre relativement faible par comparaison au diamètre extérieur du mandrin de serrage (4), en particulier dans la plage de 3 mm à 6 mm.
